(19) Europäisches Patentamt
European Patent Office
Office européen des brevets

(11) EP 1 311 585 B1

(12) **FASCICULE DE BREVET EUROPEEN**

(45) Date de publication et mention de la délivrance du brevet:
**09.11.2005 Bulletin 2005/45**

(21) Numéro de dépôt: **01960631.8**

(22) Date de dépôt: **07.08.2001**

(51) Int Cl.7: **C08G 69/36**, C08G 73/14, C08G 83/00

(86) Numéro de dépôt international:
**PCT/EP2001/009111**

(87) Numéro de publication internationale:
**WO 2002/012373 (14.02.2002 Gazette 2002/07)**

(54) **COPOLYAMIDES ET COMPOSITIONS A BASE DE CES COPOLYAMIDES**
COPOLYAMIDE UND ZUSAMMENSETZUNGEN AUF BASIS VON DIESEN
COPOLYAMIDES AND COMPOSITIONS BASED ON SAME

(84) Etats contractants désignés:
**AT BE CH CY DE DK ES FI FR GB GR IE IT LI LU MC NL PT SE TR**

(30) Priorité: **09.08.2000 FR 0010483**

(43) Date de publication de la demande:
**21.05.2003 Bulletin 2003/21**

(73) Titulaires:
- **Rhodia Engineering Plastics Srl**
  **20020 Ceriano Laghetto (MI) (IT)**
- **Di Silvestro**
  **20030 Lentate Sul Seveso (IT)**

(72) Inventeurs:
- **SPERONI, Franco**
  **I-20020 Ceriano Laghetto (IT)**
- **YUAN, Cuiming**
  **I-20126 Milano (IT)**
- **ZHANG, Haichun**
  **I-21047 Saronno (IT)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**WO-A-95/06081** **WO-A-99/03909**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 311 585 B1

## Description

La présente invention concerne des copolyamides obtenus par utilisation de monomères multifonctionnels. Elle concerne plus particulièrement des copolyamides de viscosité élevée. Elle concerne également des compositions à base de ces copolyamides.

Pour de nombreuses applications on utilise des polyamides thermoplastiques mis en forme. On cite en exemples les fils, fibres et filaments, les films, les articles obtenus par moulage, injection ou extrusion. Pour certaines applications, ou pour certains procédés de mise en forme on préfère parfois utiliser des polyamides de viscosité en phase fondue élevée. C'est le cas par exemple pour les fibres en polyamides utilisées pour la fabrication de feutres de machine à papier. C'est également le cas par exemple pour les procédés de mise en forme d'articles par extrusion-soufflage. Lors de la mise en oeuvre de ce dernier procédé, il est en général important que la pièce extrudée ne se déforme pas, ou ne se déforme que faiblement sous son propre poids. Les propriétés mécaniques du matériau, telles que le module élastique et la résistance aux chocs ne doivent de plus pas être affectées, ou ne l'être que faiblement.

Plusieurs solutions sont connues pour obtenir des polyamides de viscosité élevée. Une première solution consiste à réaliser une post-condensation en phase solide sur des polyamides linéaires. Les temps de post-condensation sont importants, ce qui génère des coûts de production importants.

Une autre solution est décrite dans la demande de brevet WO 99/03909. Elle décrit des copolyamides, obtenus par utilisation d'un monomère multifonctionnel comprenant une fonction réactive formant des liaisons amides choisie parmi les acides et les amines, et au moins deux fonctions réactives formant des liaisons amides, de nature différente et complémentaire de la précédente. Ces copolyamides présentent, pour une durée identique de polycondensation en phase fondue une viscosité en phase fondue plus élevée que celle des polyamides linéaires.

Toutefois, les copolyamides décrits dans le document présentent une viscosité que l'on cherche encore à améliorer. Un autre objectif est d'atteindre des viscosités équivalentes avec des temps de cycle de polymérisation moins importants, et/ou contrôlés.

L'invention a pour objet de proposer des nouveaux copolyamides présentant notamment une viscosité en phase fondue plus élevée ou qui, à viscosité égale, peuvent être obtenus, par des cycles de polymérisation plus courts.

A cet effet l'invention propose un copolyamide, comprenant des motifs macromoléculaires issus des monomères suivants:

- (1) au moins un monomère difonctionnel représenté par l'abréviation AB
- (II) au moins un monomère multifonctionnel représenté par l'abréviation $A_aB_b$ où A représente une fonction acide carboxylique et B représente une fonction amine, a et b étant des nombres satisfaisant les relations suivantes:
  - $a \geq 1$
  - $b \geq 1$
  - $a+b \geq 3$
- (III) au moins un monomère multifonctionnel représenté par l'abréviation $A_cB_d$ où A représente une fonction acide carboxylique et B représente une fonction amine, c et d étant des nombres satisfaisant les relations suivantes:
  - $c \geq 0$
  - $d \geq 0$
  - $c+d \geq 2$, le couple (c,d) étant différent du couple (1,1)
- les monomères (II) et (III) étant choisis de manière à ce que
  - $d>c$ si $a>b$
  - $d<c$ si $a<b$
- le rapport $\alpha$, $\alpha = \frac{ax + cy}{ax + cy + bx + dy}$,étant compris entre 0,4 et 0,6,

  où x représente le nombre de moles de monomère (II) et y représente le nombre de moles de monomère (III).

Par monomère multifonctionnel on entend un monomère comprenant au moins deux fonctions réactives.

Dans la présente demande, on utilise des abréviations (AB, $A_aB_b$, $A_cB_d$.) pour désigner des molécules organiques, ou organométalliques, servant de monomères. Les monomères sont des molécules présentant des fonctions réactives de type acides A ou de type amines B, susceptibles de former entre elles des liaisons amides.

Les fonctions de type acide sont avantageusement choisies parmi les fonctions acide carboxylique, halogénure d'acide, ester. Les fonctions de type amine sont avantageusement choisies parmi les amines, de préférence les

amines primaires, et les sels d'amines.

Le nombre de fonctions de chaque type est représenté pour les différents monomères par les lettres a, b, c, d. Les monomères (I) comportent une fonction de chaque type.

Les monomères (II) et (III) comportent respectivement au moins 3 et 2 fonctions, de préférence au plus 10. Le nombre de fonctions pour chacun (respectivement a+b et c+d) est de préférence choisi parmi 3, 4, 5, 6.

Les monomères (II) comportent au moins trois fonctions réactives, dont au moins une de chaque type. Les monomères (III) comportent au moins deux fonctions réactives, soit toutes de même type, soit de types différents. Les cas où toutes les fonctions sont identiques correspond au cas où c=0 (monomère ne comportant que des fonctions réactives de type amines), ou au cas d=0 (monomère ne comportant que des fonctions réactives de type acides). Dans le cas où les monomères (III) comportent des fonctions de types différents, le nombre de fonctions est alors strictement supérieur à deux. Ces conditions équivalent à celles exprimées par les équations et inéquations présentées ci-dessus.

Le nombre de moles de monomère (II) à partir duquel le copolyamide est obtenu est désigné par la lettre x. Le nombre de moles de monomère (III) à partir duquel le copolyamide est obtenu est désigné par la lettre y. Le nombre de moles de monomère (I) à partir duquel le copolyamide est obtenu est désigné par la lettre z.

Le rapport $\alpha$, $\alpha = \frac{ax + cy}{ax + cy + bx + dy}$ est compris entre 0,4 et 0,6 , de préférence entre 0,45 et 0,55. Il est encore plus préférablement sensiblement égal à 0,5. Cette condition équivaut à écrire que le nombre de fonctions de type amines et le nombre de fonctions de type acide des monomères (II) et (III) utilisés pour l'obtention du polymère est relativement, voire sensiblement parfaitement, équilibré.

Selon une caractéristique de l'invention, le rapport $\beta$,

$$\beta = \frac{ax + cy + bx + dy}{(a + c + b + d) * (x + y + 0{,}9 * z)}$$

est inférieur à 0,05 (5%). Il est de préférence inférieur à 0,01 (1%), et selon un mode de réalisation très avantageux inférieur à 0,002 (0,2%). L'utilisation des monomères (II) et (III) en quantités plus importantes peut conduire à des copolyamides de très hautes viscosités et de fait impliquer l'utilisation d'appareillages spéciaux afin de pouvoir récupérer le polymère après sa fabrication. A titre indicatif, et sans aucune limitation à l'invention, le facteur 0,9 appliqué au nombre de moles z du monomère de type AB rend compte que les monomères (I) ne réagissent généralement pas entièrement. Le rapport ci-dessus est donc proche d'un rapport entre le nombre de moles de monomères (II) et (III) et le nombre de moles d'unités de répétition dans le polyamide.

Selon une autre caractéristique de l'invention, le rapport $\chi$,

$$\chi = \frac{x + y}{x + y + 0{,}9 * z}$$ est de préférence inférieur à 0,25 %

Les monomères (II) et les monomères (III) peuvent respectivement être constitués d'un mélange de plusieurs monomères $A_{ai}B_{bi}$ et $A_{cj}B_{dj}$ où $a_i$, $b_i$, $c_j$ et $d_j$ répondent, pour au moins l'un d'eux, aux conditions définies plus haut pour a, b, c, d, excepté éventuellement pour le calcul des rapports $\alpha$, $\beta$ et $\chi$, pour lesquels on entend:

-
$$ax = \sum_i a_i x_i$$
pour le calcul de $\alpha$ et $\beta$

-
$$bx = \sum_i a_i x_i$$
pour le calcul de $\alpha$ et $\beta$

-
$$cy = \sum_j c_j y_j$$
pour le calcul de $\alpha$ et $\beta$

-

$$dy = \sum_j d_j y_j$$

pour le calcul de α et β

-

$$x = \sum_i x_i$$

pour le calcul de β et χ

-

$$y = \sum_j y_j$$

pour le calcul de β et χ

où

- $a_i$ représente le nombre de fonctions de type acide d'un monomère (II) référencé i
- $b_i$ représente le nombre de fonctions de type amine d'un monomère (II) référencé i
- $c_j$ représente le nombre de fonctions de type acide d'un monomère (III) référencé j
- $d_j$ représente le nombre de fonctions de type amine d'un monomère (III) référencé j
- $x_i$ représente le nombre de moles d'un monomère (II) référencé i
- $y_j$ représente le nombre de moles d'un monomère (III) référencé j

A titre d'exemple de système des monomères (I), (II) et (III) dans lequel le monomère (III) est un mélange de monomères on cite les systèmes dont les monomères (II) et (III) sont les suivants:

- monomère (II) $A_aB_b$, avec a<b
- monomères (III) : mélange de monomère $A_cB_0$ (multifonctionnel acide), et $A_0B_d$ (multifonctionnel amine), avec c>0 et d>0, et en quantités telles que les rapport α et β soient respectés.

Les monomères (I) sont avantageusement choisis parmi:

- l'ε-caprolactame et/ou l'aminoacide correspondant : l'acide aminocaproïque,
- et/ou l'acide para ou métaaminobenzoïque,
- et/ou l'acide amino-11-undécanoïque,
- et/ou le lauryllactame et/ou l'aminoacide correspondant :

  l'acide amino-12-dodécanoïque.

Plus généralement, les monomères (I) peuvent être les monomères utilisés pour la fabrication de polyamides thermoplastiques linéaires. Ainsi, on peut citer les composés ω-aminoalcanoïques comportant une chaîne hydrocarbonée ayant de 4 à 12 atomes de carbone, ou les lactames dérivés de ces acides aminés comme l'ε-caprolactame. On peut également utiliser des mélanges de monomères répondant à l'abréviation AB, de préférence choisis parmi les monomères proposés ci-dessus.

Les monomères (II) sont désignés par le terme générique de "monomères arbres". Ils peuvent être choisis pour la mise en oeuvre de l'invention parmi les molécules représentées par la formule (b) suivante:

$$(XR_1)\text{-}R\text{-}(R_2Y)_n \quad \text{(b)}$$

dans laquelle :

- n est un nombre entier supérieur ou égal à 2, de préférence compris entre 2 et 10 (bornes incluses), et de préférence égal à 2,
- $R_1$, $R_2$ peuvent être identiques ou différents et représentent une liaison covalente, un radical hydrocarboné aliphatique, arylaliphatique, aromatique

ou alkylaromatique

- R est un radical aliphatique linéaire ou ramifié, un radical cycloaliphatique substitué ou non, un radical aromatique substitué ou non pouvant comprendre plusieurs noyaux aromatiques et/ou des hétérocétones
- X représente la fonction amine ou sel d'amine, ou la fonction acide, ester, halogénure d'acide ou amide
- Y représente la fonction amine ou sel d'amine quand X représente une fonction acide, ester, halogénure d'acide ou amide, et une fonction acide, ester, halogénure d'acide ou amide quand Y représente une fonction amine ou sel d'amine,

Les monomères (II) convenables et préférés de l'invention sont, notamment, les monomères stables thermiquement à une température supérieure à 150°C. A titre d'exemple, on peut citer les monomères (II) conformes à la formule présentée ci-dessus dans laquelle R représente un radical aromatique tel que l'acide aminophtalique, ou un radical aliphatique linéaire tel que le diacide 3-aminopimélique, ou l'acide 6-amino undécandioïque. On peut également citer les $\alpha$-aminoacides tels que l'acide aspartique, l'acide glutamique. Les aminoacides naturels peuvent également être utilisés comme monomère (II) si leur stabilité thermique est suffisante. On peut également adapter les conditions de synthèse du copolyamide en fonction de la stabilité thermique du monomère (II).

A titre d'exemple de monomères (II), on cite:

- l'acide 5-amino-isophtalique,
- l'acide 6-amino-undécandioïque,
- le diacide 3-aminopimélique,
- l'acide aspartique,
- l'acide 3,5-diaminobenzoïque,
- l'acide 3,4-diaminobenzoïque,
- la lysine,
- et leurs mélanges.

Selon un premier mode de réalisation de l'invention, les fonctions réactives du monomère (III) sont toutes identiques, choisies parmi les fonctions de types acides ou amines. Ces monomères sont désignés sous le terme générique de "monomères coeur".

Une première catégorie de monomères coeur est constituée molécules ou macromolécules (utilisées comme monomères) présentant une structure arborescente ou dendritique. A titre d'exemple on cite les polyamines comportant un nombre élevé de motifs amines. On cite également les dendrimères totalement aromatiques décrits dans les demandes de brevets WO 95/06081.

Une deuxième catégorie de monomères coeurs est constituée des composés pouvant être choisis parmi les composés cités ci-dessous.

On cite les composés multifonctionnels choisis parmi les composés de formule (a)

$$R4-\left[C-X-H\right]_m \quad \text{(a)}$$

dans laquelle

- C est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

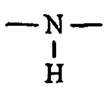 ou 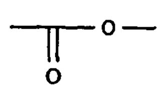

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8 (bornes incluses)

Selon encore une autre caractéristique préférée, le radical $R_4$ est soit un radical cycloaliphatique tel que le radical tétravalent de cyclohexanonyle, soit un radical 1,1,1-triyle-propane, 1,2,3-triyle-propane.

Comme autres radicaux $R_4$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation préféré de l'invention, le nombre m est supérieur à 3 et avantageusement égal à 3 ou 4.

La fonction réactive du composé multifonctionnel représentée par le symbole X-H est une fonction capable de former une fonction amide.

A titre d'exemple de composés polyfonctionnels de formule (a), on peut citer la 2,2,6,6-tétra-(β-carboxyéthyl) cyclohexanone, le diaminopropane - N,N,N',N' acide tétraacétique de formule suivante :

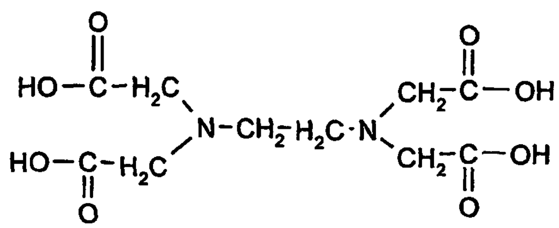

ou les composés provenant de la réaction du triméthylol propane ou du glycérol avec l'oxyde de propylène et amination des groupes hydroxydes terminaux, ces derniers composés sont commercialisés sous le nom commercial JEFFAMINES T® par la société HUNTSMAN, et ont comme formule générale :

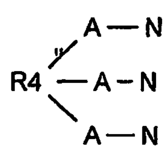

Dans laquelle :

- $R_4$ représente un radical 1,1,1-triyle propane, ou 1,2,3-triyle propane,
- A représente un radical polyoxyéthylènique.

Des exemples de composés multifonctionnels pouvant convenir sont notamment cités dans le document US 5346984, dans le document US 5959069, dans le document WO 9635739, dans le document EP 672703.
On cite plus particulièrement:
Les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyl-1,8,octanediamine.
On cite aussi les dendrimères de formule (II)

$$(R_2N\text{-}(CH_2)_n)_2\text{-}N\text{-}(CH_2)_x\text{-}N\text{-}((CH_2)_n\text{-}NR_2)_2 \qquad (II)$$

dans laquelle
R est un atome d'hydrogène ou un groupement $-(CH_2)_n-NR^1{}_2$ où
$R^1$ est un atome d'hydrogène ou un groupement $-(CH_2)_n-NR^2{}_2$ où
$R^2$ est un atome d'hydrogène ou un groupement $-(CH_2)_n-NR^3{}_2$ où
$R^3$ est un atome d'hydrogène ou un groupement $-(CH_2)_n-NH_2$,
n étant un entier compris entre 2 et 6
x étant un entier compris entre 2 et 14.
N est de préférence un entier égal à 3 ou 4, en particulier 3, et x est de préférence un entier compris entre 2 et 6, de préférence compris entre 2 et 4 (bornes incluses), en particulier 2. Chaque radical R peut être choisi indépendamment des autres. Le radical R est de préférence un atome d'hydrogène ou un groupement $-(CH_2)_n$-NH2.
On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyl, naphtyl, anthracène, biphényl et triphényl, ou les hétérocycles comme les pyridine, bipyridine, pyrrole, indole, furane, thiophène, purine, quinoline, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement l'acide 2,4,6-triaminocaproïque-1,3,5-triazine (TACT).

Selon un autre mode de réalisation les monomères (III) sont des monomères arbres, pouvant être choisis parmi ceux cités en tant que monomères (II), étant entendu:

- qu'ils sont de nature différente
- que les conditions quant au nombre de fonctions sont respectées.

Plus généralement, le choix des monomères (II) et (III) doit tout d'abord respecter les conditions quant aux nombres de fonctions de chaque type (symbolisés par les lettres a, b, c, d). Certaines combinaisons entre les monomères (II) et (III) cités ci-dessus ne sont donc pas conformes à l'invention.

Selon un mode de réalisation particulièrement avantageux, le copolyamide est obtenu à partir de systèmes de monomères (I), (II) et (III) dont les monomères (II) et (III) sont choisis parmi les systèmes suivants:

- système 1: monomère (II) $AB_2$ et monomère (III) $A_3$ ou $A_4$
- système 2: monomère (II) $A_2B$ et monomère (III) $B_3$ ou $B_4$

Selon un mode de réalisation préférentiel, on n'utilise pas de monomère monofonctionnel en complément de monomères (I), (II) ou (III).

Afin de pouvoir mettre en oeuvre la polymérisation dans les meilleurs conditions possibles on préfère tout particulièrement pour les monomères (I) (II) et (III) des monomères présentant une stabilité thermique suffisante.

Selon une caractéristique avantageuse, la fluidité en phase fondue des copolyamides, mesurée à 275°C sous 5 kg de pression est inférieure à 10 g/10 minutes.

L'invention concerne également des compositions comprenant le copolyamide décrit ci-dessus. Les compositions peuvent comprendre au moins un polyamide conforme à l'invention et éventuellement d'autres additifs tels que des aides au moulage ou démoulage, stabilisants chaleur, stabilisants lumière, antioxydants, ignifugeants, pigments, colorants, et lubrifiants. La composition peut également comprendre des agents améliorant la résistance aux chocs et/ou des charges de remplissage ou de renfort. On cite en particulier les fibres de verre.

Les compositions de l'invention peuvent également comprendre comme matrice polymérique, en plus du polyamide tel que décrit ci-dessus, d'autres matières thermoplastiques telles que des polyamides linéaires aliphatiques, éventuellement compatibilisés, ou des polyamides aromatiques ou semi-aromatiques, par exemple.

Selon une caractéristique de l'invention, les compositions de l'invention sont obtenues par mélange généralement dans une extrudeuse mono ou bivis, d'un polyamide conforme à l'invention avec les différents additifs, ce mélange étant réalisé généralement à l'état fondu du polyamide, puis extrusion du mélange sous forme de joncs qui sont ensuite découpés en granulés. Des pièces moulées peuvent ensuite être réalisées par fusion des granulés produits ci-dessus et alimentation de la composition à l'état fondu dans les dispositifs de moulage, d'injection ou d'extrusion appropriés.

L'invention a également pour objet un procédé de fabrication d'un copolyamide conforme à l'invention.

Dans un premier mode de réalisation de ce procédé de fabrication, un mélange de monomères est réalisé avec des proportions déterminées de chaque composant. Ledit mélange est polymérisé dans des conditions et selon un mode opératoire équivalent à ceux utilisés pour la fabrication du polyamide linéaire correspondant aux monomères bifonctionnels mis en oeuvre. Ainsi, quand de l'ε-caprolactame est mis en oeuvre, de l'eau est ajoutée au mélange de monomères pour amorcer l'ouverture hydrolytique du caprolactame.

Selon un second mode de réalisation de l'invention, un prépolymère de polyamide linéaire est fabriqué par polycondensation des monomères (I) pour obtenir un prépolymère de poids moléculaire en nombre $\overline{Mn}$ de l'ordre de 2000 à 3000 environ.

Les monomères (II) et (III) sont ajoutés au prépolymère linéaire et la polymérisation est poursuivie soit en milieu fondu soit en phase solide. Le mode de réalisation en phase solide permet notamment d'obtenir des copolyamides en utilisant des monomères multifonctionnels présentant une stabilité thermique à des températures relativement faibles par exemple inférieure à 200°C, car la température de postcondensation en phase solide est réalisée à des températures plus basses que celles de la polymérisation en milieu fondu.

L'addition des monomères (II) et (III) peut être réalisée en extrudeuse ou dans un réacteur, la postcondensation en phase solide étant mise eu oeuvre selon les conditions classiques et habituelles utilisées pour celle des polyamides linéaires.

Selon une autre variante de ce mode de réalisation du procédé de fabrication d'un copolyamide conforme à l'invention, les monomères (II) et (III) sont ajoutés avec un catalyseur permettant ainsi de réaliser la réaction directement dans l'extrudeuse. Les catalyseurs convenables sont les catalyseurs classiquement utilisés pour les réactions d'amidification ou de polycondensation des fonctions amides tels que les composés phosphorés par exemple.

L'invention concerne également un procédé de fabrication par extrusion de copolyamides nouveaux ou de compositions nouvelles, et les copolyamides ou compositions obtenus par le procédé. Ce procédé met en oeuvre des composés multifonctionnels, dans des conditions proches de celles décrites ci dessus, et conduisent à des composés macromoléculaires ou des compositions dont les caractéristiques sont proches sinon similaires à celles des copolyamides et compositions décrits ci-dessus.

On propose donc un procédé de fabrication d'un copolyamide ou une composition comprenant un copolyamide, consistant à mélanger dans un dispositif d'extrusion au moins les trois composés suivants:

- composé (I): un polyamide présentant des unités récurrentes dont la formule (c) est la suivante :

$$-[NH-R_3-CO]- \qquad (c)$$

- composé (II): monomère (II) tel que défini ci-dessus
- composé (III): monomère (III) tel que défini ci-dessus

le rapport α, $\alpha = \frac{ax + cy}{ax + cy + bx + dy}$, étant compris entre 0,4 et 0,6

où x représente le nombre de moles de composé (II) et y représente le nombre de moles de composé (III)

le rapport β, $\beta = \frac{ax + cy + bx + dy}{(a + c + b + d) * (x + y + z)}$ tant inférieur à 1%, de préférence 0,5%.

où z représente le nombre de moles d'unités récurrentes du composé (I) le radical $R_1$ étant un radical hydrocarboné, comportant éventuellement des hétéroatomes.

On définit z de la manière suivante:

$z=m_D/M_D$ où $m_D$ est la masse de composé (I) utilisée, et $M_D$ est la masse molaire d'une unité récurrente.

Le rapport $\alpha = \frac{ax + cy}{ax + cy + bx + dy}$ est de préférence compris entre 0,45, et 0,55. Il est encore plus préférablement sensiblement égal à 0,5.

Le rapport $\chi = \frac{x + y}{x + y + z}$ est de préférence inférieur à 0,5 %.

Le composé (I) est choisi de préférence parmi le polyamide 6, le polyamide 11, le polyamide 12, les mélanges et copolymères à base de ces polyamides.

Le procédé peut comprendre l'introduction des charges ou additifs tels que mentionnés ci-dessus. On cite tout particulièrement les fibres de verre.

Les copolyamides ou compositions selon l'invention peuvent être utilisés dans de nombreuses applications telles que la fabrication de pièces moulées ou injectées.

Ils sont notamment convenables pour la fabrication de pièces par les techniques d'extrusion-soufflage. En

effet, la faible fluidité en milieu fondu du copolyamide permet de limiter les déformations des paraisons lors de leur extrusion, avant l'étape de soufflage.

On peut également fabriquer avec les copolyamides de l'invention des articles par les procédés d'injection. Ces articles présentent des propriétés mécaniques nettement plus élevées que celles des articles obtenus par injection d'une composition à base de polyamide linéaire de même fluidité en milieu fondu.

D'autres détails ou avantages de l'invention apparaîtront plus clairement au vu des exemples donnés ci-dessous, uniquement à titre indicatif.
On utilise les monomères suivants:

- CL: Caprolactame
- AIA: Acide-5-aminoisophtalique
- DAB: Acide 2,5-diaminobenzoïque
- J3: Jeffamine T 403, commercialisée par la société Huntsman (monomère coeur triamine)
- T4: 2,2,6,6-tétra-(β-carboxyéthyl)cyclohexanone (monomère coeur tetra-acide).

On synthétise des copolyamides selon l'un des deux cycles suivants:

Cycle 1:
Dans un autoclave muni de moyens de chauffage et d'agitation, on mélange 11,3 kg de caprolactame, 300 g d'eau et différentes quantités des monomères mentionnés ci-dessus. On chauffe pendant 4 heures jusqu'à atteindre une pression de 3-6 bars, on diminue la pression en deux heures jusqu'à une pressions de 0,2 bars, en vide interne on diminue la pression à 400 mm Hg en deux heures, on maintient cette pression pendant 30 -60 minutes. On extrude le polymère obtenu sous pression d'azote (4 à 6 bars).

Cycle 2:
Polymérisation dans un autoclave pendant 10 heures à pression atmosphérique, à 275°C, sous circulation d'azote.

Les caractéristiques et propriétés des copolyamides évaluées sont les suivantes:

- Indice de fluidité en phase fondue (MFI): évalué selon la norme ISO 1133 à 275°C, sous 5 kg de pression.
- Viscosité Relative (RV): évaluée dans une solution d'acide sulfurique à 96%, selon la norme ISO 307.
- Groupements terminaux $NH_2$ et COOH: évalués par analyse potentiométrique. Exprimés en meq/kg de polymère.
- Propriété Mécaniques:
  - Impact: Résistance au choc IZOD entaillé, mesurée à 23°C sous humidité relative de 50%, sur matériau sec, selon la norme ISO 180\1A.
  - Module, élongation, contrainte-rupture: mesurées à 23°C sous humidité relative de 50%, sur matériau sec, selon la norme ISO 527.

Exemples 1 à 16

On synthétise différents copolyamides, dont les caractéristiques sont présentées en tableau I. Pour chaque copolyamide, on précise la nature les monomères (II) et (III) utilisés, et la quantité en pourcentage molaire (respectivement rapports $\frac{x}{x+y+0{,}9*z}$ et $\frac{y}{x+y+0{,}9*z}$ ). Le monomère (I) est du caprolactame.

Tableau I

| Exemple | Monomère (II) (nature, % molaire) | Monomère (III) (nature, % molaire) | Cycle |
|---|---|---|---|
| 1 | DAB; 0,004 | T4; 0,001 | 1 |
| 2 | DAB; 0,008 | T4; 0,002 | 1 |
| 3 | DAB; 0,024 | T4; 0,006 | 1 |
| 4 | DAB; 0,04 | T4; 0,01 | 1 |
| 5 | DAB; 0,12 | T4; 0,03 | 1 |
| 6 | DAB; 0,16 | T4; 0,04 | 1 |

Tableau I (suite)

| Exemple | Monomère (II) (nature, % molaire) | Monomère (III) (nature, % molaire) | Cycle |
|---|---|---|---|
| 7 | AIA; 0,1125 | J3; 0,0375 | 1 |
| 8 | DAB; 0,075 | AIA; 0,075 | 1 |
| 9 (comparatif) | / | / | 1 |
| 10 (comparatif) | AIA; 0,15 | / | 1 |
| 11 (comparatif) | DAB; 0,15 | / | 1 |
| 12 (comparatif) | / | / | 2 |
| 13 | AIA, 0,15 | / | 2 |
| 14 | AIA; 0,1125 | J3; 0,0375 | 2 |
| 15 (comparatif) | DAB; 0,15 | / | 2 |
| 16 | DAB; 0,12 | T4; 0,03 | 2 |

Les caractéristiques et propriétés sont présentées en tableau II.

Tableau II

| Exemple | MFI (g/10 min) | VR | $NH_2$ (meq/kg) | COOH (meq/kg) |
|---|---|---|---|---|
| 1 | 30 | 3,45 | 37,1 | 37,9 |
| 2 | 27 | 3,49 | 36,8 | 37,3 |
| 3 | 19 | 3,58 | 34,4 | 35,5 |
| 4 | 12 | 3,78 | 32,7 | 34,6 |
| 5 | 6 | 4,22 | 29,3 | 31,7 |
| 6 | <3,5 | >4,3* | 27,2 | 29,9 |
| 7 | 8,5 | 3,87 | 33,1 | 29,5 |
| 8 | 10,5 | 3,97 | 30,8 | 32,8 |
| 9 | 34 | 3,21 | 42,4 | 41,4 |
| 10 | 22 | 3,41 | 22,7 | 45,5 |
| 11 | 18 | 3,5 | 51,3 | 24,2 |
| 12 | 15 | 3,89 | 30,9 | 31,9 |
| 13 | 4,5 | 4,55 | 27 | 54 |
| 14 | 2,1 | 5,46 | 25,5 | 21 |
| 15 | 5,2 | 4,72 | 34,8 | 19,7 |
| 16 | 1,7 | 5,73 | 22,5 | 20,6 |

Les propriétés mécaniques de certains des polymères sont présentées en tableau (III)

Tableau (III)

| Polymère | Impact ($kJ/m^2$) | Module ($N/mm^2$) | Elongation (%) | Contrainte rupture ($N/mm^2$) |
|---|---|---|---|---|
| Exemple 9 | 5.2 | 2610 | 70 | 46.2 |
| PA 6 VR 4 | 5.7 | 2780 | 90 | 46.7 |
| Exemple 10 | 4.9 | 2638 | 85 | 49.1 |
| Exemple 1 | 5.5 | 2990 | 71 | 47 |
| Exemple 5 | 5.7 | 2990 | 90 | 48 |

Exemple 17

On effectue une post-condensation en phase solide, à 175 °C, sous azote, sur respectivement un copolyamide selon l'exemple 1 et un polyamide 6 linéaire, selon l'exemple 9. On mesure toutes les deux heures la viscosité relative des polymères. Les courbes représentant l'évolution sont présentées en figure 1, avec en ordonnée le temps en heures, et en abscisse la viscosité relative.

On observe que la viscosité relative ne diverge pas pour les copolyamides selon l'invention. La masse moléculaire des copolyamides selon l'invention est donc aisée à contrôler.

Exemple 18

On évalue les propriétés rhéologiques de différents polyamides et copolyamides, à différents cisaillements. On utilise pour cela un rhéomètre capillaire GOETTFRERT WinRHEO V 3,22; à température de 250°C, et pressions de 65 à 1200 bars. Ces mesures sont effectuées respectivement sur les polymères suivants:

- copolyamide selon l'exemple 5
- polyamide 6 de viscosité viscosité relative 4 (PA 6 VR 4)
- polyamide 6 de viscosité viscosité relative 5 (PA 6 VR 5)

Les courbes représentant la viscosité en phase fondue (Pa.s) en fonction du cisaillement ($s^{-1}$) sont présentées en figure 2.

On observe que la différence du comportement rhéologique entre un copolyamide selon l'invention et un polyamide linéaire est plus marquée à faible cisaillement qu'à fort cisaillement. Cela rend les copolyamides selon l'invention particulièrement intéressants, notamment pour les procédés d'extrusion. Ils présentent une bonne processabilité dans une extrudeuse (fort cisaillement) ainsi qu'une viscosité élevée à faible cisaillement, après extrusion, pour l'opération de soufflage.

Exemple 20

On fabrique des bouteilles par extrusion-soufflage à l'aide d'un appareil COMEC MS 1000, dans les conditions suivantes:

- Profil de température dans l'extrudeuse (°C): 220; 230, 235, 235, 240, 240, 240, 235
- Pression: 200 Bar
- Vis: 40 tours/minute
- Pression de soufflage: 4 Bar
- Temps de soufflage: 8 secondes
- Temps de cycle: 16 sec
- Polymère utilisé : Exemple 5.

Le poids des bouteilles obtenues est de 115±10 gr. Les parois ont une épaisseur constante et régulière, avec un excellent aspect de surface.

## Revendications

**1.** Copolyamide, comprenant des motifs macromoléculaires issus des monomères suivants:

- (I) au moins un monomère difonctionnel représenté par l'abréviation AB
- (II) au moins un monomère multifonctionnel représenté par l'abréviation $A_aB_b$ où A représente une fonction acide carboxylique et B représente une fonction amine, a et b étant des nombres satisfaisant les relations suivantes:
  - $a \geq 1$
  - $b \geq 1$
  - $a+b \geq 3$
- (III) au moins un monomère multifonctionnel représenté par l'abréviation $A_cB_d$ où A représente une fonction

acide carboxylique et B représente une fonction amine, c et d étant des nombres satisfaisant les relations suivantes:

- $c \geq 0$
- $d \geq 0$
- $c+d \geq 2$, le couple (c,d) étant différent du couple (1,1)

- les monomère (II) et (III) étant choisis de manière à ce que

  - d>c si a>b
  - d<c si a<b

- le rapport $\frac{ax + cy}{ax + cy + bx + dy}$ étant compris entre 0,4 et 0,6,
  où x représente le nombre de moles de monomère (II) et y représente le nombre de moles de monomère (III)
- le rapport $\frac{ax + cy + bx + dy}{(a + c + b + d) * (x + y + 0,9z)}$ est inférieur à 0,05,
  où z représente le nombre de moles de monomère (I).

**2.** Copolyamide selon la revendication 1 **caractérisé en ce que** le rapport

$$\frac{ax + cy + bx + dy}{(a + c + b + d) * (x + y + 0,9z)}$$

est inférieur à 0,01,
où z représente le nombre de moles de monomère (I).

**3.** Copolyamide selon la revendication 2 **caractérisé en ce que** le rapport

$$\frac{ax + cy + bx + dy}{(a + c + b + d) * (x + y + 0,9z)}$$

est inférieur à 0,002.

**4.** Copolyamide selon l'une des revendications précédentes, **caractérisé en ce que** le rapport $\chi = \frac{x + y}{x + y + 0,9 * z}$ est inférieur à 0,25 %.

**5.** Copolyamide selon l'une des revendications précédentes **caractérisé en ce que** les entiers a, b, c, d sont choisis de manière à satisfaire une des séries de relations suivantes:

- a>b, c=0, $d \geq 3$
- a<b, d=0, $c \geq 3$

**6.** Copolyamide selon l'une des revendications précédentes **caractérisé en ce que** a=1, b=2, c=4, d=0.

**7.** Copolyamide selon l'une des revendications précédentes **caractérisé en ce que** l'indice de fluidité en phase fondue, mesuré à 275°C sous charge de 5 kg, est inférieur à 10 g/10 minutes.

**8.** Copolyamide selon l'une des revendications précédentes **caractérisé en ce que** le monomère (I) est un lactame, un aminoacide ou un mélange de ces composés.

**9.** Copolyamide selon l'une des revendications précédentes **caractérisé en ce que** le monomère (I) est choisi parmi le caprolactame, l'acide aminocaproïque et leurs mélanges.

**10.** Copolyamide selon l'une des revendications précédentes **caractérisé en ce que** le monomère (II) est représenté par la formule (b) :

$$(XR_1)\text{-}R\text{-}(R_2Y)_n \qquad (b)$$

dans laquelle :

- n est un nombre entier supérieur ou égal à 2, de préférence compris entre 2 et 10 (bornes incluses), et de préférence égal à 2,
- $R_1$, $R_2$ peuvent être identiques ou différents et représentent une liaison covalente, un radical hydrocarboné aliphatique, arylaliphatique, aromatique ou alkylaromatique
- R est un radical aliphatique linéaire ou ramifié, un radical cycloaliphatique substitué ou non, un radical aromatique substitué ou non pouvant comprendre plusieurs noyaux aromatiques et/ou des hétérocétones
- X représente la fonction amine ou sel d'amine, ou la fonction acide, ester, halogénure d'acide ou amide
- Y représente la fonction amine ou sel d'amine quand X représente une fonction acide, ester, halogénure d'acide ou amide, et une fonction acide, ester, halogénure d'acide ou amide quand Y représente une fonction amine ou sel d'amine.

**11.** Copolyamide selon l'une des revendications précédentes **caractérisé en ce que** le monomère (III) est représenté par la formule (a)

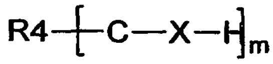 (a)

dans laquelle

- C est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

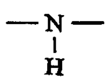 ou 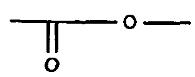

ou

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8, bornes incluses.

**12.** Copolyamide selon la revendication 11 **caractérisé en ce que** le composé multifonctionnel est choisi parmi la 2,2,6,6-tétra-(β-carboxyéthyl)cyclohexanone, l'acide trimésique, la 2,4,6-tri-(acide amino caproïque)-1,3,5-triazine, la 4-aminoéthyle-1,8-octanediamine.

**13.** Copolyamide selon l'une des revendications précédentes **caractérisé en ce qu'**il est obtenu par mélange dans un dispositif d'extrusion d'au moins les trois composés suivants:

- composé (I): un polyamide présentant des unités récurrentes dont la formule (c) est la suivante :

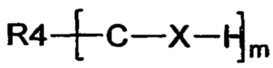 (a)

- composé (II): monomère (II) tel que défini ci-dessus
- composé (III): monomère (III) tel que défini ci-dessus
  le rapport α, $\alpha = \frac{ax + cy}{ax + cy + bx + dy}$, étant compris entre 0,4 et 0,6
  où x représente le nombre de moles de composé (II) et y représente le nombre de moles de composé (III)

le rapport β, $\beta = \frac{ax + cy + bx + dy}{(a + c + b + d) * (x + y + z)}$ étant inférieur à 1%, de préférence 0,5%.

où z représente le nombre de moles d'unités récurrentes du composé (1)

le radical $R_1$ étant un radical hydrocarboné, comportant éventuellement des hétéroatomes.

**14.** Composition comprenant une matrice copolyamide et une charge de renfort, **caractérisé en ce que** la matrice est constituée d'un copolyamide selon l'une des revendications précédentes.

**15.** Fils, fibres et filaments, articles moulés, injectés, films constitués d'un copolyamide ou d'une composition selon l'une des revendications précédentes.

**16.** Article obtenu par extrusion-soufflage d'un polyamide ou d'une composition selon l'une des revendications précédentes.

## Claims

**1.** Copolyamide, comprising macromolecular units derived from the following monomers:

- (I) at least one difunctional monomer represented by the abbreviation AB
- (II) at least one multifunctional monomer represented by the abbreviation $A_aB_b$ in which A represents a carboxylic acid function and B represents an amine function, a and b being numbers that satisfy the following relationships:

  - $a \geq 1$
  - $b \geq 1$
  - $a+b \geq 3$

- (III) at least one multifunctional monomer represented by the abbreviation $A_cB_d$ in which A represents a carboxylic acid function and B represents an amine function, c and d being numbers that satisfy the following relationships:

  - $c \geq 0$
  - $d \geq 0$
  - $c+d \geq 2$, the pair (c,d) being different than the pair (1,1)

- the monomers (II) and (III) being chosen such that

  - $d>c$ if $a>b$
  - $d<c$ if $a<b$

- the ratio $\frac{ax + cy}{ax + cy + bx + dy}$ being between 0.4 and 0.6,
  in which x represents the number of moles of monomer (II) and y represents the number of moles of monomer (III)
- the ratio $\frac{ax + cy + bx + dy}{(a + c + b + d) * (x + y + 0{,}9^*z)}$ is less than 0.05,
  in which z represents the number of moles of monomer (I).

**2.** Copolyamide according to Claim 1, **characterized in that** the ratio $\frac{ax + cy + bx + dy}{(a + c + b + d) * (x + y + 0{,}9^*z)}$ is less than 0.01, in which z represents the number of moles of monomer (I).

**3.** Copolyamide according to Claim 2, **characterized in that** the ratio $\frac{ax + cy + bx + dy}{(a + c + b + d) * (x + y + 0{,}9^*z)}$ is less than 0.002.

**4.** Copolyamide according to one of the preceding claims, **characterized in that** the ratio $\chi = \frac{x+y}{x + y + 0.9^*z}$ is less than 0.25%.

**5.** Copolyamide according to one of the preceding claims, **characterized in that** the integers a, b, c and d are chosen

so as to satisfy one of the following series of relationships:

- a>b, c=0, d≥3
- a<b, d=0, c≥3.

**6.** Copolyamide according to one of the preceding claims, **characterized in that** a=1, b=2, c=4 and d=0.

**7.** Copolyamide according to one of the preceding claims, **characterized in that** the melt flow index, measured at 275°C under a 5 kg load, is less than 10 g/10 minutes.

**8.** Copolyamide according to one of the preceding claims, **characterized in that** the monomer (I) is a lactam, an amino acid or a mixture of these compounds.

**9.** Copolyamide according to one of the preceding claims, **characterized in that** the monomer (I) is chosen from caprolactam and aminocaproic acid, and mixtures thereof.

**10.** Copolyamide according to one of the preceding claims, **characterized in that** the monomer (II) is represented by formula (b):

$$(XR_1)\text{-}R\text{-}(R_2Y)_n \qquad (b)$$

in which:

- n is an integer greater than or equal to 2 and preferably between 2 and 10 (limits included) and preferably equal to 2,
- $R_1$ and $R_2$ may be identical or different and represent a covalent bond or an aliphatic, arylaliphatic, aromatic or alkylaromatic hydrocarbon-based radical,
- R is a linear or branched aliphatic radical, a substituted or unsubstituted cycloaliphatic radical, a substituted or unsubstituted aromatic radical possibly comprising several aromatic nuclei and/or hetero ketones
- X represents an amine or amine salt function, or an acid, ester, acid halide or amide function
- Y represents an amine or amine salt function when X represents an acid, ester, acid halide or amide function, and an acid, ester, acid halide or amide function when Y represents an amine or amine salt function.

**11.** Copolyamide according to one of the preceding claims, **characterized in that** the monomer (III) is represented by formula (a)

$$R4-\left[-C-X-H\right]_m \qquad (a)$$

in which

- C is a covalent bond or an aliphatic hydrocarbon-based radical that may comprise hetero atoms, and containing from 1 to 20 carbon atoms and preferably from 1 to 6 carbon atoms,
- X is a radical

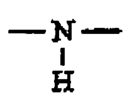 or 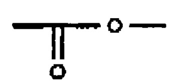

- $R_4$ is a linear or cyclic, aromatic or aliphatic hydrocarbon-based radical containing at least two carbon atoms and possibly comprising hetero atoms,
- m is an integer between 3 and 8, limits included.

**12.** Copolyamide according to Claim 11, **characterized in that** the multifunctional compound is chosen from

2,2,6,6-tetrakis(β-carboxyethyl)cyclohexanone, trimesic acid, 2,4,6-tris(aminocaproic acid)-1,3,5-triazine and 4-aminoethyl-1,8-octanediamine.

**13.** Copolyamide according to one of the preceding claims, **characterized in that** it is obtained by mixing, in an extrusion device, at least the following three compounds:

- compound (I): a polyamide containing repeating units of formula (c) below:

$$-[NH-R_3-CO]- \qquad (c)$$

- compound (II): monomer (II) as defined above
- compound (III): monomer (III) as defined above the ratio α, $\alpha = \frac{ax + cy}{ax + cy + bx + dy}$ being between 0.4 and 0.6,

  in which x represents the number of moles of compound (II) and y represents the number of moles of compound (III)

the ratio β, $\beta = \frac{ax + cy + bx + dy}{(a + c + b + d) * (x + y + z)}$ being less than 1% and preferably 0.5%,
in which z represents the number of moles of repeating units in compound (I)
the radical $R_1$ being a hydrocarbon-based radical optionally comprising hetero atoms.

**14.** Composition comprising a copolyamide matrix and a reinforcing filler, **characterized in that** the matrix consists of a copolyamide according to one of the preceding claims.

**15.** Yarns, fibres, filaments, moulded or injection-moulded articles, or films consisting of a copolyamide or of a composition according to one of the preceding claims.

**16.** Article obtained by extrusion blow-moulding of a polyamide or of a composition according to one of the preceding claims.

**Patentansprüche**

**1.** Copolyamid, umfassend makromolekulare Struktureinheiten, die von den folgenden Monomeren stammen:

- (I) mindestens einem difunktionellen Monomer, dargestellt durch die Abkürzung AB
- (II) mindestens einem multifunktionellen Monomer, dargestellt durch die Abkürzung $A_aB_b$, worin A eine Carbonsäurefunktion und B eine Aminfunktion darstellen, wobei a und b Zahlen sind, die den folgenden Beziehungen entsprechen:
  - $a \geq 1$
  - $b \geq 1$
  - $a + b \geq 3$
- (III) mindestens einem multifunktionellen Monomer, dargestellt durch die Abkürzung $A_cB_d$, worin A eine Carbonsäurefunktion und B eine Aminfunktion darstellen, wobei c und d Zahlen sind, die den folgenden Beziehungen entsprechen:
  - $c \geq 0$
  - $d \geq 0$
  - $c + d \geq 2$, wobei das Paar (c,d) von dem Paar (1,1) unterschiedlich ist
- die Monomere (II) und (III) werden in der Weise ausgewählt, daß
  - d > c ist, wenn a > b ist
  - d < c ist, wenn a < b ist

- das Verhältnis $\frac{ax + cy}{ax + cy + bx + by}$ liegt zwischen einschließlich 0,4 und 0,6,

worin x die Anzahl der Mole von Monomer (II) und y die Anzahl der Mole von Monomer (III) darstellen,

- das Verhältnis $\frac{ax + cy + bx + dy}{(a + c + b + d) * (x + y + 0{,}9z)}$ liegt unter 0,05,

worin z die Anzahl der Mole von Monomer (I) darstellt.

**2.** Copolyamid nach Anspruch 1, **dadurch gekennzeichnet, daß** das Verhältnis $\frac{ax + cy + bx + dy}{(a + c + b + d)*(x + y + 0{,}9z)}$ unter 0,01 liegt, worin z die Anzahl der Mole von Monomer (I) darstellt.

**3.** Copolyamid nach Anspruch 2, **dadurch gekennzeichnet, daß** das Verhältnis $\frac{ax + cy + bx + dy}{(a\ c + b + d)*(x + y + 0{,}9*z)}$ unter 0, 002 liegt.

**4.** Copolyamid nach einem der vorstehenden Ansprüche, **dadurch gekennzeichnet, daß** das Verhältnis X = $\frac{x + y}{x + y + 0{,}9*z}$ unter 0,25 % beträgt.

**5.** Copolyamid nach einem der vorstehenden Ansprüche, **dadurch gekennzeichnet, daß** die Ganzen a, b, c, d in der Weise ausgewählt werden, daß eine der Reihen der folgenden Beziehungen

- $a > b$, $c = 0$, $d \geq 3$
- $a < b$, $d = 0$, $c \geq 3$

erfüllt ist.

**6.** Copolyamid nach einem der vorstehenden Ansprüche, **dadurch gekennzeichnet, daß** a = 1, b = 2, c = 4, d = 0 sind.

**7.** Copolyamid nach einem der vorstehenden Ansprüche, **dadurch gekennzeichnet, daß** der Fluiditätsindex in geschmolzener Phase, gemessen bei 275 °C unter einer Last von 5 kg, unter 10 g/10 Minuten beträgt.

**8.** Copolyamid nach einem der vorstehenden Ansprüche, **dadurch gekennzeichnet, daß** das Monomer (I) ein Lactam, eine Aminosäure oder eine Mischung dieser Verbindungen ist.

**9.** Copolyamid nach einem der vorstehenden Ansprüche, **dadurch gekennzeichnet, daß** das Monomer (I) unter Caprolactam, Aminocapronsäure und ihren Mischungen ausgewählt wird.

**10.** Copolyamid nach einem der vorstehenden Ansprüche, **dadurch gekennzeichnet, daß** das Monomer (II) durch die folgende Formel (b) dargestellt wird:

$$(XR_1)\text{-}R\text{-}(R_2Y)_n,$$

in der

- n eine ganze Zahl von über oder gleich 2 darstellt, vorzugsweise zwischen einschließlich 2 und 10 (Grenzwerte eingeschlossen) und vorzugsweise gleich 2,
- $R_1$, $R_2$ gleich oder verschieden sein können und eine kovalente Bindung, einen aliphatischen, arylaliphatischen, aromatischen oder alkylaromatischen Kohlenwasserstoff-Rest darstellen,
- R einen linearen oder verzweigten aliphatischen Rest, einen substituierten oder unsubstituierten cycloaliphatischen Rest, einen substituierten oder unsubstituierten aromatischen Rest, der mehrere aromatische Kerne und/oder Heteroketone umfassen kann, darstellt,
- X die Aminfunktion oder Aminsalz oder die Funktion Säure, Ester, Säurehalogenid oder Amid darstellt,
- Y die Aminfunktion oder Aminsalz darstellt, wenn X eine Funktion Säure, Ester, Säurehalogenid oder Amid darstellt, und eine Funktion Säure, Ester, Säurehalogenid oder Amid darstellt, wenn Y eine Aminfunktion oder Aminsalz darstellt.

**11.** Copolyamid nach einem der vorstehenden Ansprüche, **dadurch gekennzeichnet, daß** das Monomer (III) durch die folgende Formel (a) dargestellt wird:

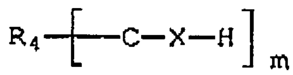 (a)

in der

- C eine kovalente Bindung oder einen aliphatischen Kohlenwasserstoff-Rest darstellt, der Heteroatome umfassen kann und 1 bis 20 Kohlenstoffatome, vorzugsweise 1 bis 6 Kohlenstoffatome enthält,

- X ein Rest

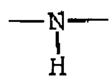 oder 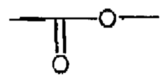

ist,

- $R_4$ einen linearen oder cyclischen, aromatischen oder aliphatischen Kohlenwasserstoff-Rest darstellt, der mindestens zwei Kohlenstoffatome umfaßt und Heteroatome umfassen kann,

- m eine ganze Zahl zwischen einschließlich 3 und 8 ist, Grenzwerte eingeschlossen.

**12.** Copolyamid nach Anspruch 11, **dadurch gekennzeichnet, daß** die multifunktionelle Verbindung unter 2,2,6,6-Tetra-(β-carboxyethyl)-cyclohexanon, Trimesinsäure, 2,4,6-Tri-(aminocapronsäure)-1,3,5-triazin, 4-Aminoethyl-1,8-octandiamin ausgewählt wird.

**13.** Copolyamid nach einem der vorstehenden Ansprüche, **dadurch gekennzeichnet, daß** es durch Vermischen in einer Extrusionsvorrichtung von mindestens den folgenden drei Verbindungen erhalten wird:

- Verbindung (I): einem Polyamid, das wiederkehrende Einheiten aufweist, bei dem die Formel (c) die folgende ist:

$$-[NH-R_3-CO]- \qquad (c)$$

- Verbindung (II): Monomer (II) wie oben definiert,
- Verbindung (III): Monomer (III) wie oben definiert,

wobei das Verhältnis α, $\alpha = \frac{ax + cy}{ax + cy + bx + dy}$ zwischen einschließlich 0,4 und 0,6 liegt, worin x die Anzahl der Mole von Monomer (II) und y die Anzahl der Mole von Monomer (III) darstellen,
das Verhältnis β, $\beta = \frac{ax + cy + bx + dy}{(a + c + b + d) * (x + y + z)}$ unter 1 % liegt, vorzugsweise 0,5 %,
worin z die Anzahl der Mole von wiederkehrenden Einheiten der Verbindung (I) darstellt und der Rest $R_1$ ein Kohlenwasserstoff-Rest ist, der gegebenenfalls Heteroatome umfaßt.

**14.** Zusammensetzung, umfassend eine Copolyamid-Matrix und einen verstärkenden Füllstoff, **dadurch gekennzeichnet, daß** die Matrix aus einem Copolyamid nach irgendeinem der vorstehenden Ansprüche besteht.

**15.** Fäden, Fasern und Filamente, gegossene und gespritzte Artikel, Filme, bestehend aus einem Copolyamid oder einer Zusammensetzung nach einem der vorstehenden Ansprüche.

**16.** Artikel, erhalten durch Extrusions-Blasen von einem Polyamid oder einer Zusammensetzung nach einem der vorstehenden Ansprüche.

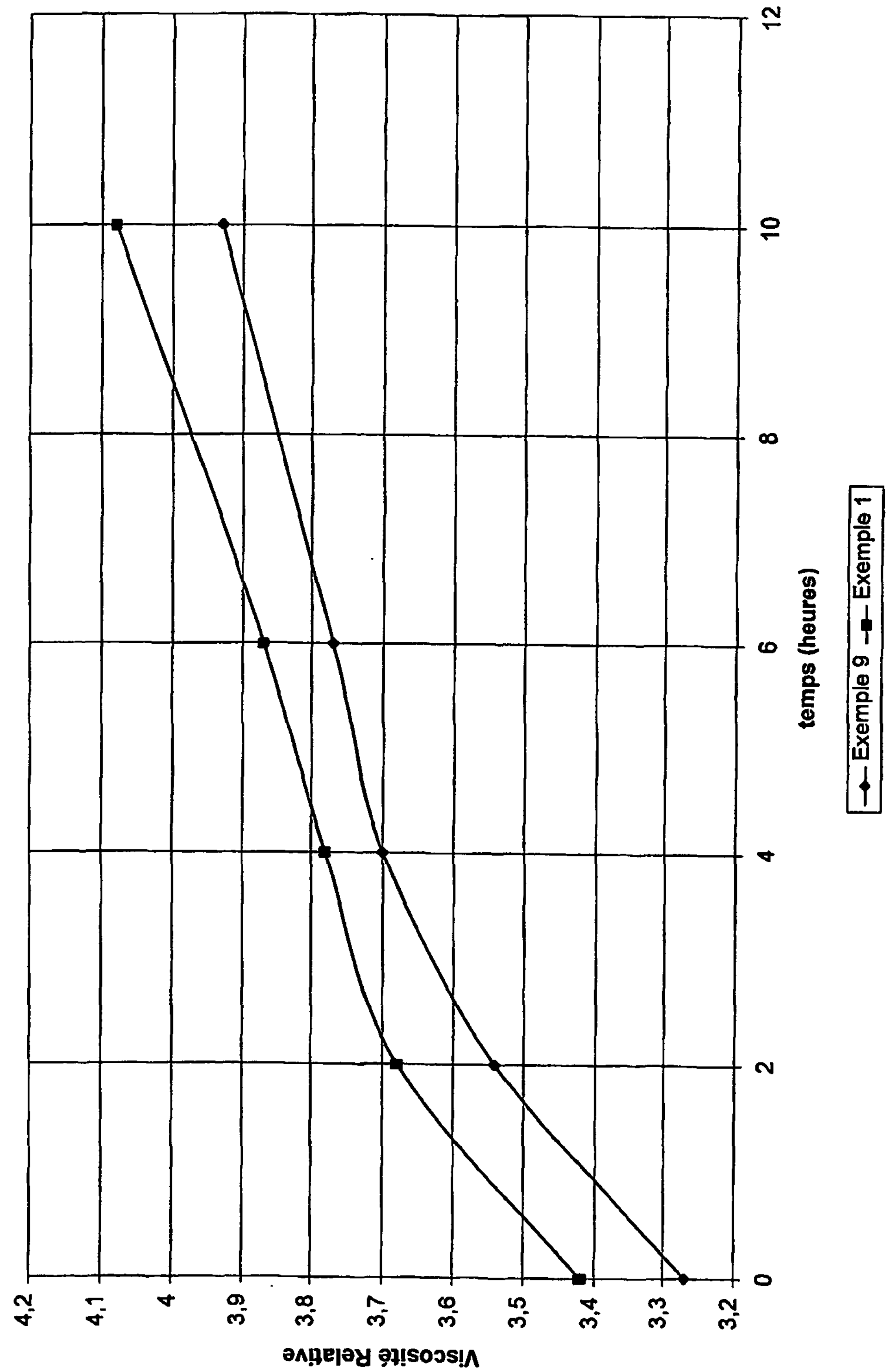
Viscosité Relative
4,2
4,1
4
3,9
3,8
3,7
3,6
3,5
3,4
3,3
3,2
temps (heures)
0
2
4
6
8
10
12
Exemple 9
Exemple 1

Figure 1

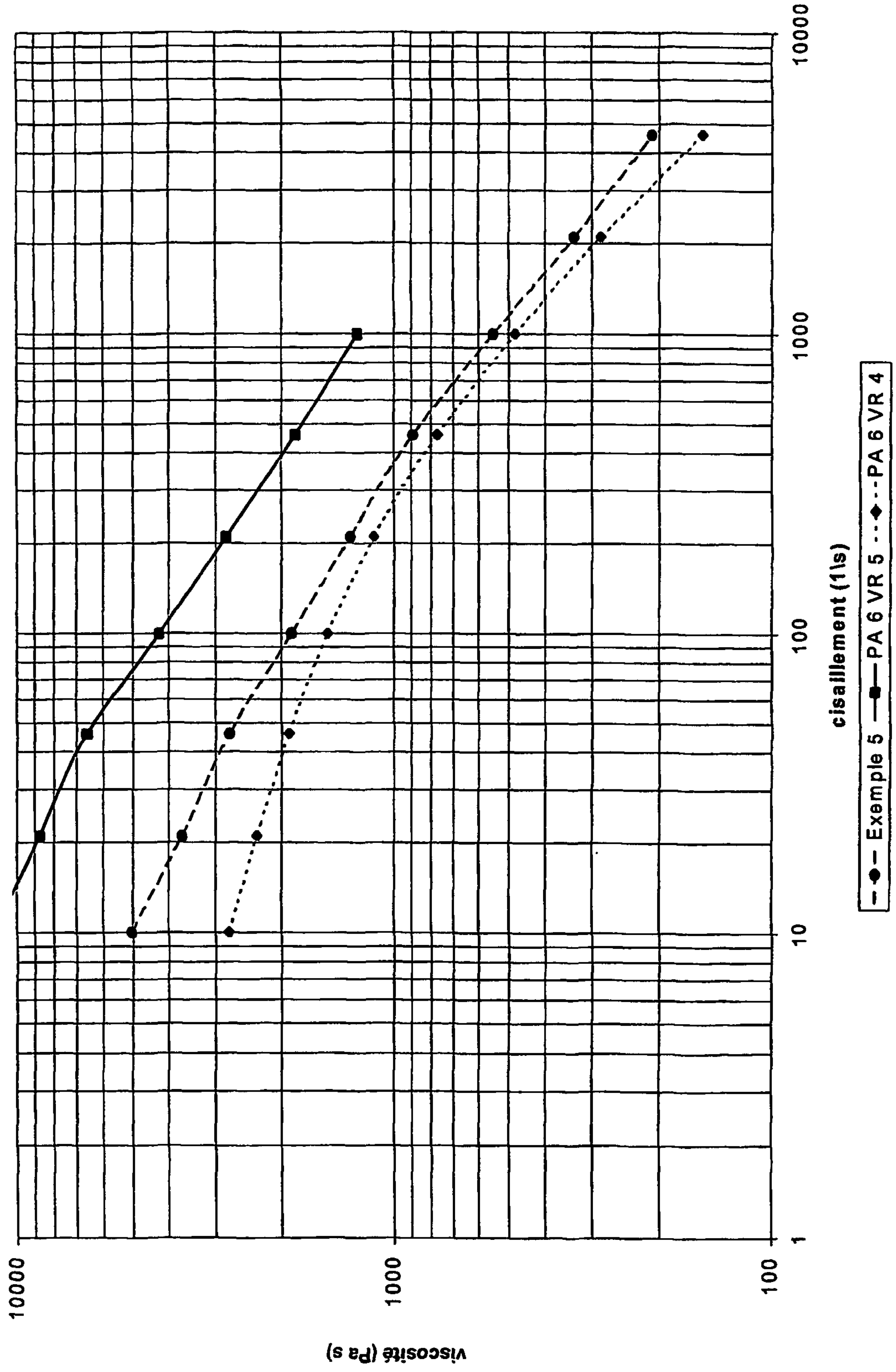
viscosité (Pa s)
10000
1000
100
1
10
100
1000
10000
cisaillement (1\s)
Exemple 5
PA 6 VR 5
PA 6 VR 4

Figure 2